# EUROPEAN PATENT SPECIFICATION

(11) **EP 4 428 645 B1**
(45) Date of publication and mention of the grant of the patent: **18.03.2026**
(21) Application number: 21967595.6
(22) Date of filing: 15.12.2021
(51) Int. Cl.: B60W 60/00, B60W 30/18, B60W 40/09, B60W 50/10, B60W 50/00, G01C 21/26, G01C 21/34, G01C 21/36

(54) **INTELLIGENT DRIVING METHOD AND APPARATUS, AND VEHICLE COMPRISING APPARATUS**
INTELLIGENTES ANTRIEBSVERFAHREN UND VORRICHTUNG SOWIE FAHRZEUG MIT DER VORRICHTUNG
PROCÉDÉ ET APPAREIL DE CONDUITE INTELLIGENTS ET VÉHICULE COMPRENANT UN APPAREIL

(43) Date of publication of application: 11.09.2024
(73) Proprietor: Shenzhen Yinwang Intelligent Technologies Co., Ltd., Shenzhen City, Guangdong 518129 (CN)
(72) Inventor: SU, Qing, Shenzhen, Guangdong 518129 (CN); LU, Xingyang, Shenzhen, Guangdong 518129 (CN); ZHANG, Yeqing, Shenzhen, Guangdong 518129 (CN); LI, Shuaijun, Shenzhen, Guangdong 518129 (CN)
(74) Representative: Gill Jennings & Every LLP
(86) International application number: PCT/CN2021/138179
(87) International publication number: WO 2023/108455

(56) References cited:
- WO-A1-2020/226014
- WO-A1-2020/230613
- CN-A- 106 314 419
- CN-A- 108 227 695
- CN-A- 113 060 141
- JP-A- 2013 129 328
- JP-A- 2021 175 630
- US-A1- 2017 308 090
- US-A1- 2020 393 261
- US-A1- 2021 284 162

## Description

### TECHNICAL FIELD

This application relates to the field of intelligent driving technologies, and in particular, to a method and an apparatus for intelligent driving based on a high-definition map, and a vehicle including the apparatus.

### BACKGROUND

In recent years, intelligent driving technologies have been developed rapidly. Intelligent driving, also known as automated driving or assisted driving, is an important direction of intelligent vehicle development. As sensing technologies develop and chip capabilities improve, intelligent driving provides increasingly abundant driving functions for people, and gradually implements driving experience of different levels. The Society of Automotive Engineers (society of automotive engineers, SAE) provides a grading standard for driving automation, including driving level 0 to level 5. At level 0, no automation is used. A human driver is fully responsible for operating a vehicle, and during driving, a driving system warning or driving system assistance may be obtained, for example, autonomous emergency braking (autonomous emergency braking, AEB), blind spot monitoring (blind spot monitoring, BSM), or a lane departure warning (lane departure warning, LDW). At level 1, driving assistance is used. Driving operations are performed jointly by the human driver and the driving system, the driving system may provide driving support for steering wheel operations or acceleration/deceleration operations by using a driving environment, and other driving operations are performed by the human driver, for example, adaptive cruise control (adaptive cruise control, ACC), or lane keep assistance/support (lane keep assistance/support, LKA/LKS). At level 2, partial automation is used. Driving support is provided for steering wheel operations and acceleration/deceleration operations by using a driving environment, and other driving actions are performed by the human driver, for example, a vehicle following function combining adaptive cruise control (adaptive cruise control, ACC) and lane keep assistance (lane keep assistance, LKA). At level 3, conditional automation is used. The driving system can complete all driving operations, but the human driver needs to respond to a request of the driving system at an appropriate time, that is, the human driver needs to be prepared for takeover from the driving system. At level 4, high automation is used. The driving system can complete all driving operations, and the human driver does not necessarily respond to a request of the driving system. For example, the human driver may not take over driving when road and environment conditions permit (for example, in a closed park, a highway, an urban road, or a fixed driving route). At level 5, full automation is used. The driving system can independently complete driving operations under various road and environment conditions that can be handled by the human driver. It can be learned that, at level 0 to level 2, the driving system mainly provides support for the driver, and the driver still needs to supervise driving, and turn, brake, or accelerate as required to ensure safety. At level 3 to level 5, the driving system can take the place of the driver to complete all driving operations. At level 3, the driver needs to be prepared for take-over of driving. At level 4 and level 5, the driving system can implement full driving under partial and all conditions respectively, and the driver can choose whether to perform take-over.

Intelligent driving can be combined with a high-definition map to implement/improve various functions. Examples are as follows: (1) High-precision positioning: Conventional positioning is based on a global positioning system, generally can reach only meter-level precision, and is greatly affected by weather, urban buildings, underground scenarios, and the like. However, positioning precision based on the high-definition map may reach a centimeter level, and the high-definition map may be used to provide more accurate positioning information for a vehicle. In addition, compared with a conventional map, the high-definition map has information of more dimensions such as a road slope and road curvature. With information of more dimensions, an algorithm module of an intelligent driving system may be better integrated. (2) Auxiliary environmental perception: Based on the high-definition map, information such as roads, traffic, and basic settings around a vehicle can be obtained, so as to provide auxiliary information for an intelligent driving perception system. (3) Navigation and route planning: More accurate and optimized route planning can be implemented based on information in the high-definition map. For example, lane-level precision navigation can be implemented at a flow intersection, and a vehicle position can be accurately obtained in an elevated road scenario, so as to provide navigation in a three-dimensional scenario for a vehicle.

Currently, for a vehicle having an intelligent driving capability (generally, the vehicle is a vehicle whose SAE level is the foregoing level 2 or higher), the vehicle may implement a cruise mode that is based on road structure cognition, or may implement a navigation mode that is based on a high-definition map. For the cruise mode that is based on the road structure cognition, the vehicle uses a sensor (for example, a lidar, a millimeter-wave radar, or a camera) of the vehicle to recognize a lane line and/or a surrounding obstacle for cruising, for example, an adaptive cruise function performed by the vehicle in a city. In this cruise mode, a driver may switch a lane by shifting a lever or in another operating manner. However, the mode cannot be performed on a road section (for example, an intersection) without a lane line (for example, a left turn, a right turn, or a U-turn cannot be implemented at the intersection). For the navigation mode that is based on the high-definition map, lane-level navigation with a specific destination is generally set, and lane switching cannot be implemented during driving. In addition, for the navigation mode that is based on the high-definition map, in an intersection scenario, because a navigation route is known, how the vehicle passes through the intersection is also determined by navigation route planning. Therefore, in the intersection scenario, the vehicle in the high-definition map navigation mode has no lane switching function (for example, in the high-definition map navigation mode, if the navigation route indicates to pass straight through the intersection, even if the driver performs an operation with an intention of turning left through the intersection, the operation cannot be implemented). Therefore, for the current intelligent vehicle, in the high-definition map navigation mode, the driver has relatively low driving freedom and the vehicle cannot roam.

US2021/0284162A1 discloses a method and apparatus for controlling an ADAS equipped vehicle.

US2017/0308090A1 discloses deriving a timing of energy supply in an automatic driving process.

WO2020/230613A1 discloses a display control method.

JP2021175630A discloses a driving support device.

### SUMMARY

In view of the foregoing problems, an intelligent driving mode based on a high-definition map is needed, and precise navigation of the high-definition map for a vehicle and roaming of the vehicle are combined in the mode. In this mode, the vehicle can implement high-level intelligent driving by using the high-definition map, and a driver has high driving freedom and rights to control the vehicle, and can freely process lane switching in complex scenarios such as intersections. Therefore, embodiments of this application provide an intelligent driving method and apparatus, and a storage medium.

According to a first aspect, an embodiment of this application provides an intelligent driving method according to claim 1. According to the intelligent driving method, a vehicle roams based on a high-definition map.

As described in the foregoing Background, a current intelligent vehicle has no function of roaming that is based on a high-definition map, and in a process of driving based on high-definition map navigation, a driver has relatively low freedom to control the vehicle. However, according to the intelligent driving method in this application, the vehicle performs roaming based on the high-definition map. "Roaming" includes lane switching, intersection passing, partial navigation strategy changing, and the like performed by the vehicle in the process of driving based on high-definition map navigation, and may further include an automated driving process performed, when no specific destination is set, by the vehicle through cognition of a structure of a surrounding road at least based on high-definition map information. According to the technical solutions of this application, "high-precision" information of the high-definition map can be used to navigate the vehicle, so that the vehicle may roam, thereby improving an intelligent driving degree of the vehicle. In addition, related partial adjustment can be performed on a roaming process of the vehicle in real time based on a related operation input of the driver without interrupting a navigation process. This not only makes use of a data advantage of the high-definition map, but also makes an entire intelligent driving process more user-friendly.

Further, "roaming" of the vehicle may include intersection passing, lane switching, partial navigation strategy changing, and driving direction changing. The following cases are considered: (1) An intersection is usually an area lacking lane lines. Therefore, a conventional intelligent driving method based on lane line recognition usually fails at the intersection. (2) In a conventional technology, intelligent driving that is based on a high-definition map is usually performed only in a lane that is set in a navigation route, and lane switching cannot be implemented if there is no switchable lane in the navigation route. (3) In a conventional technology, in a navigation process that is based on a high-definition map, it is difficult for a driver to partially adjust a navigation strategy based on a current road situation without exiting the navigation process during driving. (4) In a conventional technology, in a navigation process that is based on a high-definition map, it is usually difficult for a driver to temporarily change a driving direction of a vehicle based on determining of the driver (the vehicle needs to travel in a lane that is planned based on the high-definition map). In other words, if the vehicle is going straight through currently, it is difficult for the driver to operate the vehicle to turn right ahead. Therefore, a vehicle roaming mode in this application can overcome the foregoing disadvantages in the conventional technology. It should be understood that the foregoing plurality of concepts (intersection passing, lane switching, partial navigation strategy changing, and driving direction changing) may partially overlap in semantics. For example, "lane switching" and "driving direction changing" partially overlap in semantics, because in some cases, for example, when the vehicle switches from a through lane to a right-turn lane, not only a driving lane changes, but also a driving direction changes. These concepts are described in this application for clear and complete purposes.

In some possible implementations, the vehicle obtains, based on iterative forward search, a planned route of the vehicle at a road intersection ahead in a driving direction of the vehicle, where the planned route includes a default navigation route of the vehicle at the road intersection; and determines, based on turn behavior cost and turn angle cost, a route with lowest turn cost of the vehicle at the road intersection ahead, and determines the route with the lowest turn cost as the default navigation route of the vehicle at the road intersection ahead. In this application, the vehicle performs the iterative forward search in real time. With the use of such an iterative setting, the vehicle continuously updates determining of a forward road situation and a planned route that is made based on the road situation, thereby ensuring that the vehicle continuously determines a current driving strategy based on current information. In addition, an "easiest" route for the vehicle to pass at the road intersection ahead is first set by setting the route with the lowest turn cost of the vehicle at the road intersection ahead as the default navigation route.

In some possible implementations, a trigger condition of the iterative forward search includes at least one of the following: there is no planned route ahead of the vehicle, the vehicle has passed through a road intersection, a distance between the vehicle and a maximum range of current forward search is less than a specified threshold, or the vehicle yaws. With the use of the foregoing setting, the vehicle may have a specific event to trigger forward search during driving, so as to implement a continuous iterative forward search process. It should be noted that a maximum range of forward search is a value that may be preset. Generally, the maximum range of forward search may be set to any value within a range of 3000 meters to 6000 meters on a highway, and may be set to any value within a range of 500 meters to 1500 meters in an urban area. "The vehicle yaws" means, on the premise that the vehicle is based on high-definition map navigation, that the vehicle deviates from a road (Road) planned by the navigation.

In some possible implementations, a default navigation route at the road intersection ahead in the driving direction of the vehicle is determined based on the turn behavior cost, the turn angle cost, and driver habit cost. The foregoing driver habit cost is determined by historical data of the driver passing through the road intersection. In the technical solutions of this application, impact of a driving history of the vehicle on a current intelligent driving decision is fully considered by introducing the driver habit cost, so that an intelligent driving strategy of the vehicle is closer to a historical choice of the driver, and the driver has better experience of intelligent driving of the vehicle.

In some possible implementations, the default navigation route at the road intersection ahead in the driving direction of the vehicle is determined based on the driver habit cost. In this setting, the vehicle can determine the current intelligent driving decision completely based on the historical choice of the driver.

The vehicle implements the lane switching, the partial navigation strategy changing, or the driving direction changing based on an operation of a driver, where the operation of the driver includes at least one of the following: lever shifting, voice control, button control, or gesture control. A combination of a plurality of possible implementations makes control of the vehicle simpler and more user-friendly for the driver.

The following logic is included: obtaining a direction of an operation intention of the driver; obtaining a lane in which the vehicle is currently located and a default turn type for the lane; when the lane in which the vehicle is currently located is not a side lane in the direction of the operation intention of the driver, and a current turn type of the vehicle is consistent with the default turn type for the lane, enforcing a lane switching decision on the vehicle, wherein a turn type of the vehicle after lane switching is a default turn type for a lane in which the vehicle is located.

In some possible implementations, the following logic is included: determining a direction of an operation intention of the driver; determining a lane in which the vehicle is currently located and a default navigation route; and when the lane in which the vehicle is currently located is not a side lane in the direction of the operation intention of the driver, and a default navigation route of the vehicle after lane switching is consistent with a current turn type, enforcing a lane switching decision on the vehicle. A meaning of the logic may be understood as follows: First, the operation intention of the driver needs to be determined. For example, if the driver shifts a lever rightward, it may be determined that the driver expects the vehicle to perform a "rightward" action. In this case, whether the vehicle is currently located in a rightmost lane of a road is first determined. If the vehicle is currently located in the rightmost lane of the road, the vehicle cannot perform a "rightward" lane switching operation. If the vehicle is not located in the rightmost lane of the road, and after the vehicle switches to a lane rightward, a default navigation route of the vehicle is consistent with a current default navigation route of the vehicle, the vehicle performs a rightward lane switching operation based on the intention of moving "rightward" of the driver. It should be understood that, although the foregoing example is that the driver shifts the lever rightward, the foregoing logic is also applicable when the driver shifts the lever leftward or expresses an intention of the driver in another manner. Based on the foregoing logic, in the technical solutions of this application, whether to perform lane switching for the vehicle may be determined in real time based on an operation of the driver.

When a distance between the vehicle and a next road fork is less than a safe distance, the operation of the driver is ignored. Based on common traffic knowledge, if operations such as lane switching are performed when a distance from a road intersection is excessively close, a great risk of a traffic accident may be posed. Therefore, in the technical solutions of this application, such a scenario is considered, and a safe distance is set. If the driver performs an operation when the distance (which is less than the safe distance) from the road intersection is excessively close, the operation of the driver is ignored, and the vehicle keeps traveling on an original planned route, to improve traffic safety of the vehicle.

In some possible implementations, the following logic is included: determining that a distance between the vehicle and a next road fork is greater than a safe distance; and when the operation intention of the driver is opposite to the current turn type of the vehicle, setting the current turn type to the default navigation route. Based on the logic, in the technical solutions of this application, when a strategy of a planned solution of the vehicle is greatly different from (or opposite to) the operation intention of the driver, an "intermediate strategy (that is, restoration to a default turn type)" is selected, so that prioritized control rights of the driver are considered, and reduction of a traffic risk of the vehicle caused by a misoperation of the driver as much as possible is further considered.

In some possible implementations, the following logic is included: determining that a distance between the vehicle and a next road fork is greater than a safe distance; and when the operation intention of the driver is not opposite to the current default navigation route of the vehicle, setting the default navigation route of the vehicle to a next turn type consistent with the direction indicated by the operation intention of the driver. Based on the logic, in the technical solutions of this application, the vehicle can move in the direction indicated by the intention of the driver.

In some possible implementations, information related to the roaming is displayed in a human-machine interaction interface of the vehicle, where the human-machine interaction interface includes at least one of a vehicle central control screen and a head-up display. In this manner, the vehicle can transmit driving information to the driver in real time.

In some possible implementations, when the high-definition map fails, the driver is prompted to perform take-over or that an automated driving capability of the vehicle is degraded.

According to a second aspect, an embodiment of this application provides an intelligent driving apparatus, including a processor and a memory. The memory stores an instruction set, and the instruction set may be executed by the processor to implement any one of the technical solutions in the first aspect.

According to a third aspect, an embodiment of this application provides an intelligent vehicle, including the intelligent driving apparatus in the second aspect.

According to a fourth aspect, an embodiment of this application provides a non-volatile computer-readable storage medium. The non-volatile computer-readable storage medium stores computer program instructions, and when the computer program instructions are executed by a processor, any one of the technical solutions in the first aspect may be implemented.

A vehicle that is based on the technical solutions of this application can implement a roaming (Roam) mode that is based on a high-definition map. When traveling in the roaming mode, the vehicle can implement precise navigation from a start point to an end point by using the high-definition map. In addition, without re-planning an overall navigation strategy, a driver of the vehicle performs a related control operation on the vehicle in a navigation process, for example, lane switching, intersection passing, or partial navigation strategy changing. When the driver performs the foregoing operation, the vehicle does not exit the navigation process, but partially adjusts the navigation process in real time based on the operation of the driver. The "overall navigation strategy" means a navigation purpose of the vehicle from the start point to the end point. The "partial navigation strategy" means adjustment on lane choices and turn choices of partial road sections in a process of the vehicle traveling from the start point to the end point. In some embodiments, the roaming mode may further mean that the vehicle travels based on the high-definition map when no navigation target is set for the vehicle. To be specific, the vehicle recognizes an ambient environment based on the high-definition map (or based on information obtained by a sensor of the vehicle), and travels on a road based on recognized information. In the foregoing process, the driver may perform a related control operation on the vehicle, for example, lane switching, intersection passing, or driving direction changing of the vehicle (for example, the vehicle changes from going straight through to turning right). In the foregoing roaming mode, the intelligent vehicle can implement precise lane-level navigation from the start point to the end point by using the high-definition map. In addition, the vehicle driver can dynamically optimize and adjust a partial navigation route of the vehicle based on a current situation in a vehicle driving process, and does not interrupt a previous setting of an overall navigation direction that is based on the high-definition map, so that advantages of a machine and a human are combined, and the intelligent vehicle is more intelligent. In addition, highest control rights are granted to the human driver, so that the intelligent vehicle is more user-friendly.

### BRIEF DESCRIPTION OF DRAWINGS

FIG. 1 is a schematic diagram of an intelligent vehicle according to an embodiment of this application;
FIG. 2 is a schematic diagram of a framework of an intelligent driving system according to an embodiment of this application;
FIG. 3 is a schematic diagram of functional modules of an intelligent driving system according to an embodiment of this application;
FIG. 4 is a schematic diagram of a functional framework of a roaming navigation system according to an embodiment of this application;
FIG. 5 shows pseudocode of a planning procedure of a roaming mode according to an embodiment of this application;
FIG. 6-1 is a schematic diagram of a scenario according to an embodiment of this application;
FIG. 6-2 shows pseudocode of a navigation procedure of a roaming mode according to an embodiment of this application;
FIG. 7-1 is a schematic diagram of a scenario according to an embodiment of this application;
FIG. 7-2 is a schematic diagram of a scenario according to an embodiment of this application;
FIG. 8-1 is a schematic diagram of a scenario according to an embodiment of this application;
FIG. 8-2 is a schematic diagram of a scenario according to an embodiment of this application;
FIG. 9-1 is a schematic diagram of a scenario according to an embodiment of this application;
FIG. 9-2 is a schematic diagram of a scenario according to an embodiment of this application; and
FIG. 10 is a schematic diagram of a head-up display (HUD) according to an embodiment of this application.

### DESCRIPTION OF EMBODIMENTS

Various example embodiments, features, and aspects of this application are described below in detail with reference to the accompanying drawings. Identical reference signs in the accompanying drawings represent elements that have same or similar functions. Although various aspects of embodiments are shown in the accompanying drawings, unless otherwise particularly specified, the accompanying drawings do not need to be drawn to scale.

An intelligent vehicle and an intelligent driving system provided in embodiments of this application are first described below as examples.

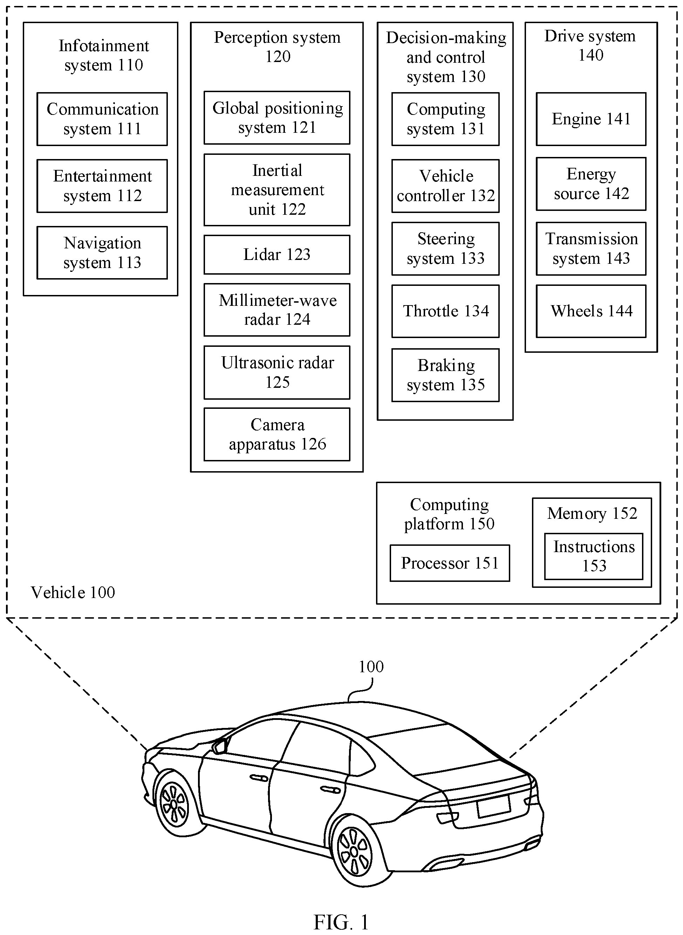

FIG. 1 is a schematic functional block diagram of a vehicle 100 according to an embodiment of this application. The vehicle 100 may be configured to be in a full or partial automated driving mode. For example, the vehicle 100 may obtain information about an ambient environment of the vehicle 100 by using a perception system 120, and obtain an automated driving strategy based on analysis of the information about the ambient environment, to implement full automated driving, or present an analysis result to a user, to implement partial automated driving.

The vehicle 100 may include various subsystems, for example, an information and entertainment system 110, the perception system 120, a decision-making and control system 130, a drive system 140, and a computing platform 150. Optionally, the vehicle 100 may include more or fewer subsystems, and each subsystem may include a plurality of components. In addition, each subsystem and component of the vehicle 100 may be connected to another in a wired or wireless manner.

In some embodiments, the information and entertainment system 110 may include a communication system 111, an entertainment system 112, and a navigation system 113.

The communication system 111 may include a wireless communication system, and the wireless communication system may wirelessly communicate with one or more devices directly or by using a communication network. For example, a wireless communication system 146 may perform communication by using a 3G cellular network, for example, CDMA, EVDO, or GSM/GPRS, or perform communication by using a 4G cellular network, for example, LTE, or perform communication by using a 5G cellular network. The wireless communication system may communicate with a wireless local area network (wireless local area network, WLAN) by using Wi-Fi. In some embodiments, the wireless communication system 146 may directly communicate with a device by using an infrared link, Bluetooth, or ZigBee. As for various vehicle communication systems in other wireless protocols, for example, the wireless communication system may include one or more dedicated short range communications (dedicated short range communications, DSRC) devices, and these devices may include public and/or private data communication between vehicles and/or roadside stations.

The entertainment system 112 may include a central control screen, a microphone, and a sounder. A user may listen to radio and play music in a vehicle by using the entertainment system. Alternatively, a mobile phone is connected to a vehicle, to implement screen projection of the mobile phone on the central control screen. The central control screen may be a touchscreen, and the user may perform an operation by touching the screen. In some cases, a voice signal of a user may be obtained by using the microphone, and some control performed by the user on the vehicle 100 is implemented based on analysis of the voice signal of the user, for example, a temperature inside the vehicle is adjusted. In other cases, music may be played for the user by using the sounder.

The navigation system 113 may include a map service provided by a map supplier, so as to provide navigation of a driving route for the vehicle 100. The navigation system 113 may be used together with a global positioning system 121 and an inertial measurement unit 122 of the vehicle. The map service provided by the map supplier may be a two-dimensional map or a high-definition map.

The perception system 120 may include several types of sensors that sense the information about the ambient environment of the vehicle 100. For example, the perception system 120 may include the global positioning system 121 (the global positioning system may be a GPS system, or may be a BeiDou system or another positioning system), the inertial measurement unit (inertial measurement unit, IMU) 122, a lidar 123, a millimeter-wave radar 124, an ultrasonic radar 125, and a camera apparatus 126. The perception system 120 may further include sensors (an in-vehicle air quality monitor, a fuel gauge, an oil temperature gauge, and the like) of an internal system of the monitored vehicle 100. Sensor data from one or more of these sensors may be used to detect an object and corresponding features (a position, a shape, a direction, a speed, and the like) of the object. Such detection and recognition are key functions of safe operation of the vehicle 100.

The global positioning system 121 may be configured to estimate a geographical position of the vehicle 100.

The inertial measurement unit 122 is configured to sense a position and an orientation change of the vehicle 100 based on inertial acceleration. In some embodiments, the inertial measurement unit 122 may be a combination of an accelerometer and a gyroscope.

The lidar 123 may sense, by using laser, an object in an environment in which the vehicle 100 is located. In some embodiments, the lidar 123 may include one or more laser sources, a laser scanner and one or more detectors, and another system component.

The millimeter-wave radar 124 may sense an object in the ambient environment of the vehicle 100 by using a radio signal. In some embodiments, in addition to sensing an object, the radar 126 may further be configured to sense a speed and/or a moving direction of the object.

The ultrasonic radar 125 may sense an object around the vehicle 100 by using an ultrasonic signal.

The camera apparatus 126 may be configured to collect image information of the ambient environment of the vehicle 100. The camera apparatus 126 may include a monocular camera device, a binocular camera device, a structured light camera device, a panorama camera device, and the like. The image information obtained by the camera apparatus 126 may include a static image, or may include video stream information.

The decision-making and control system 130 includes a computing system 131 that performs analysis and decision-making based on information obtained by the perception system 120. The decision-making and control system 130 further includes a vehicle controller 132 that controls a power system of the vehicle 100, and a steering system 133, a throttle 134 (including an acceleration pedal of an electric vehicle, which is an example name herein), and a braking system 135 that are configured to control the vehicle 100.

The computing system 131 may be operated to process and analyze various information obtained by the perception system 120 to recognize a target, and an object and/or a feature in the ambient environment of the vehicle 100. The target may include a pedestrian or an animal, and the object and/or the feature may include a traffic signal, a road boundary, and an obstacle. The computing system 131 may use technologies such as an object recognition algorithm, a structure from motion (Structure from Motion, SFM) algorithm, and video tracking. In some embodiments, the computing system 131 may be configured to: map an environment, track an object, estimate a speed of an object, and the like. The computing system 131 may analyze obtained various information and obtain a control strategy for the vehicle.

The vehicle controller 132 may be configured to coordinate and control a power battery and an engine 141 of the vehicle, to improve power performance of the vehicle 100.

The steering system 133 may be operated to adjust a traveling direction of the vehicle 100. For example, in an embodiment, the steering system 133 may be a steering wheel system.

The throttle 134 is configured to control an operating speed of the engine 141 and further control a speed of the vehicle 100.

The braking system 135 is configured to control the vehicle 100 to decelerate. The braking system 135 may slow down wheels 144 through friction force. In some embodiments, the braking system 135 may convert kinetic energy of the wheels 144 into a current. The braking system 135 may alternatively reduce a rotation speed of the wheels 144 in another manner, to control the speed of the vehicle 100.

The drive system 140 may include a component that provides power for the vehicle 100 to move. In an embodiment, the drive system 140 may include the engine 141, an energy source 142, a transmission system 143, and the wheels 144. The engine 141 may be a combination of an internal combustion engine, a motor, an air compression engine, or another type of engine, for example, a hybrid engine including a gasoline engine and a motor, or a hybrid engine including an internal combustion engine and an air compression engine. The engine 141 converts the energy source 142 into mechanical energy.

The energy source 142 includes, for example, gasoline, diesel, another oil-based fuel, propane, another compressed gas-based fuel, ethanol, a solar panel, a battery, and another power source. The energy source 142 may also provide energy for another system of the vehicle 100.

The transmission apparatus 143 may transmit mechanical power from the engine 141 to the wheels 144. The transmission apparatus 143 may include a gearbox, a differential, and a drive shaft. In an embodiment, the transmission apparatus 143 may further include another component, for example, a clutch. The drive shaft may include one or more shafts that may be coupled to one or more wheels 121.

Some or all functions of the vehicle 100 are controlled by the computing platform 150. The computing platform 150 may include at least one processor 151, and the processor 151 may execute instructions 153 stored in a non-transitory computer-readable medium, for example, a memory 152. In some embodiments, the computing platform 150 may alternatively be a plurality of computing devices that control an individual component or a subsystem of the vehicle 100 in a distributed manner.

The processor 151 may be any conventional processor, for example, a commercially available CPU. Alternatively, the processor 151 may further include, for example, a graphics processing unit (Graphics Processing Unit, GPU), a field programmable gate array (Field Programmable Gate Array, FPGA), a system on chip (System on Chip, SOC), an application-specific integrated circuit (Application Specific Integrated Circuit, ASIC), or a combination thereof. Although FIG. 1 functionally illustrates the processor, the memory, and another element of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Therefore, a reference to the processor or the computer is understood as including a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the memory 152 may include the instructions 153 (for example, program logic), and the instructions 153 may be executed by the processor 151 to perform various functions of the vehicle 100. The memory 152 may also include extra instructions, including instructions used to send data to, receive data from, interact with, and/or perform control on one or more of the information and entertainment system 110, the perception system 120, the decision-making and control system 130, and the drive system 140.

In addition to the instructions 153, the memory 152 may further store data, for example, a road map, route information, and a position, a direction, a speed, and other vehicle data of the vehicle, and other information. Such information may be used by the vehicle 100 and the computing platform 150 during operation of the vehicle 100 in an autonomous mode, a semi-autonomous mode, and/or a manual mode.

The computing platform 150 may control functions of the vehicle 100 based on inputs received from various subsystems (for example, the drive system 140, the perception system 120, and the decision-making and control system 130). For example, the computing platform 150 may use an input from the decision-making and control system 130 to control the steering system 133 to avoid an obstacle detected by the perception system 120. In some embodiments, the computing platform 150 is operated to provide control on many aspects of the vehicle 100 and the subsystems of the vehicle.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on embodiments of this application.

An automated driving vehicle traveling on a road, for example, the vehicle 100, may recognize an object in an ambient environment of the automated driving vehicle, to determine to adjust a current speed. The object may be another vehicle, a traffic control device, or another type of object. In some examples, each recognized object may be considered independently, and based on a feature of each object, for example, a current speed of the object, acceleration of the object, and a distance between the object and the vehicle, may be used to determine a speed to be adjusted by the automated driving vehicle.

Optionally, the vehicle 100 or a perception and computing device (for example, the computing system 131 and the computing platform 150) associated with the vehicle 100 may predict behavior of a recognized object based on a feature of the recognized object and a status of an ambient environment (traffic, rain, ice on a road, and the like). Optionally, all recognized objects depend on behavior of each other, and therefore all recognized objects may be considered together to predict behavior of a single recognized object. The vehicle 100 can adjust the speed of the vehicle 100 based on the predicted behavior of the recognized object. In other words, the automated driving vehicle can determine, based on the predicted behavior of the object, a specific stable status (for example, acceleration, deceleration, or stop) to which the vehicle needs to be adjusted. In this process, another factor may also be considered for determining the speed of the vehicle 100, for example, a transverse position of the vehicle 100 on a road on which the vehicle travels, curvature of the road, and proximity between a static object and a dynamic object.

In addition to providing an instruction for adjusting the speed of the automated driving vehicle, the computing device may further provide an instruction for modifying a steering angle of the vehicle 100, so that the automated driving vehicle follows a given track and/or maintains safe transverse and longitudinal distances between the automated driving vehicle and an object (for example, a car in an adjacent lane on the road) near the automated driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

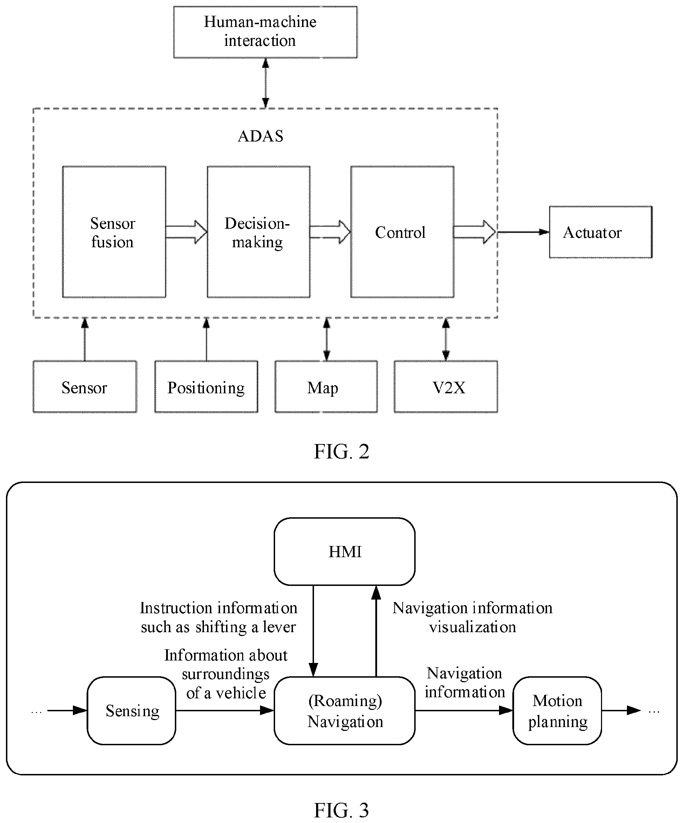

FIG. 2 is a schematic diagram of an example framework of an intelligent driving system. From a perspective of logical functions, the intelligent driving system mainly includes a perception module, a decision-making module, and a control module.

The intelligent driving system may be referred to as an automated driving system (automated driving system, ADS) or a driver assistance system, for example, an advanced driver assistance system (advanced driver assistant system, ADAS). The intelligent driving system uses a sensor on a vehicle to obtain information about the vehicle and surroundings of the vehicle, and analyzes and processes the obtained information to implement obstacle perception, target recognition, vehicle positioning, route planning, driver monitoring/reminding, and the like, so as to improve driving safety, automation, and comfort of the vehicle.

The perception module has an environmental perception capability, for example, may recognize an obstacle around the vehicle, detect a road mark, recognize a signal light, and detect behavior of a pedestrian/vehicle around the vehicle. In order to improve an environmental perception capability of the intelligent driving system, more types and/or quantities of sensors, for example, a lidar, a millimeter-wave radar, and a camera, are disposed on the vehicle. The perception module may further have a capability of sensing the vehicle itself, and there are more types of sensors that sense a status of the vehicle itself, including sensors configured to measure a speed, a temperature, pressure, a flow, a position, a gas concentration, light brightness, humidity, a distance, and the like. For example, the perception module may obtain a speed of the vehicle by using a speed sensor, and obtain a position of an acceleration pedal or a braking pedal by using a position sensor. In addition, the perception module may determine a position of the vehicle relative to an environment by using a localization (localization) system. The localization system may be, for example, a global positioning system (global positioning system, GPS) and/or an inertial navigation system (inertial navigation system).

The perception module obtains information about the vehicle and surroundings of the vehicle by using a sensor, and may process the obtained information and provide processed information to a planning module. The processing includes, for example, information fusion (information fusion) of a plurality of sensors, to improve accuracy of perception information. In this case, the perception module may be referred to as a sensor fusion module.

The decision-making module may be referred to as a planning module, and performs driving decision-making/planning based on information provided by the perception module. For example, a decision on next driving behavior of the vehicle is made based on information about a current environment in which the vehicle is located, for example, acceleration/deceleration, lane switching, turning, braking, or warning. In addition, through human-machine interaction, the intelligent driving system may further implement information exchange with a person (including a driver or a passenger) on the vehicle, obtain a requirement of the person on the vehicle, and feed back a current status or a warning of the vehicle to the person on the vehicle. The decision-making module may further perform route decision-making/planning, for example, select an optimal route based on a requirement of a user. The requirement of the user includes one or more of a start point, an end point, a waypoint, route preference, and the like.

The control module performs corresponding control based on the driving decision of the decision-making module, for example, sends a control instruction to a corresponding executor or a controller of the executor, to control the executor to perform a corresponding action, for example, acceleration/deceleration, lane switching, turning, braking, or warning.

An input of the intelligent driving system not only includes an information input of a sensor of the intelligent driving system, but also includes an information input obtained from another place, so as to improve automated driving performance. For example, the intelligent driving system may obtain map information from a server of a map supplier to assist in driving decision-making. For another example, the intelligent driving system may obtain driving environment information, for example, weather information and traffic status information (a vehicle flow, an average vehicle flow speed, and the like), from a cloud to assist in driving decision-making. For another example, the intelligent driving system may obtain driving information and/or perception information of another vehicle from another intelligent terminal (another intelligent vehicle, a portable terminal of a pedestrian, or the like) to assist in driving decision-making. The intelligent driving system may obtain information from another place by using a wireless communication technology. The wireless communication technology is, for example, cellular network-based communication or dedicated short range communications (dedicated short range communications, DSRC). The cellular network-based communication is, for example, a long term evolution (long term evolution, LTE) communication technology or a 5th generation (5th generation, 5G) communication technology. The cellular network-based communication includes vehicle-to-everything (vehicle-to-everything, V2X) communication, and the V2X communication includes vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, vehicle-to-network (vehicle to network, V2N) communication, or the like. This provides a vehicle with a plurality of ways to obtain information, enriches input information of the intelligent driving system, and improves automated driving performance.

In addition, implementation of the intelligent driving system requires relatively large computing power, and is usually implemented by using a dedicated hardware platform, for example, a multi-domain controller (Multi Domain Controller, MDC). To be specific, all or some functions of the perception module, the decision-making module, and the control module are implemented by using the dedicated hardware platform, for example, the MDC. Software in the intelligent driving system may be upgraded. For example, an information processing algorithm of the perception module, a decision-making algorithm of the decision-making module, or the like may be upgraded in a software update manner. The software update may be implemented by using an over-the-air (over the air, OTA) technology.

FIG. 3 is a schematic diagram of functional modules of an intelligent driving system according to an embodiment of this application. As shown in FIG. 3, information about surroundings of a vehicle obtained by a perception module of the vehicle is transmitted to a roaming (navigation) module in an intelligent driving system of the vehicle. In addition, an operation instruction (for example, instruction information such as shifting a lever) of a driver from HMI is transmitted to the roaming (navigation) module in the intelligent driving system of the vehicle. Based on the foregoing two types of information, the (roaming) navigation module makes a decision on whether to plan a route, switch a lane, or switch a navigation route. Information about decision-making completion is transmitted to a motion planning module of the vehicle for transverse and/or longitudinal motion planning of the vehicle, and the information about decision-making completion is also transmitted to the HMI, so as to implement visualization of a motion situation of the vehicle. It should be understood that the intelligent driving system may further include but is not limited to, for example, an apparatus like a processor and a memory.

According to the technical solutions in some embodiments of this application, an intelligent vehicle may implement a roaming (Roam) mode that is based on a high-definition map. When traveling in the roaming mode, the vehicle can implement precise navigation from a start point to an end point by using the high-definition map. In addition, without re-planning an overall navigation strategy, a driver of the vehicle performs a related control operation on the vehicle in a navigation process, for example, lane switching, intersection passing, or partial navigation strategy changing. When the driver performs the foregoing operation, the vehicle does not exit the navigation process, but partially adjusts the navigation process in real time based on the operation of the driver. The "overall navigation strategy" means a navigation purpose of the vehicle from the start point to the end point. The "partial navigation strategy" means adjustment on lane choices and turn choices of partial road sections in a process of the vehicle traveling from the start point to the end point. In some embodiments, the roaming mode may further mean that the vehicle travels based on the high-definition map when no navigation target is set for the vehicle. To be specific, the vehicle recognizes an ambient environment based on the high-definition map (or based on information obtained by a sensor of the vehicle), and travels on a road based on recognized information. In the foregoing process, the driver may perform a related control operation on the vehicle, for example, lane switching, intersection passing, or driving direction changing of the vehicle (for example, the vehicle changes from going straight through to turning right). In the foregoing roaming mode, the intelligent vehicle can implement precise lane-level navigation from the start point to the end point by using the high-definition map. In addition, the vehicle driver can dynamically optimize and adjust a partial navigation route of the vehicle based on a current situation in a vehicle driving process, and does not interrupt a previous setting of an overall navigation direction that is based on the high-definition map, so that advantages of a machine and a human are combined, and the intelligent vehicle is more intelligent. In addition, highest control rights are granted to the human driver, so that the intelligent vehicle is more user-friendly.

It should be understood that the foregoing "intelligent vehicle" generally is a vehicle whose SAE level is level 2 or higher.

For clarity, the following concepts are defined.
(1) Turn cost: Turn cost means cost that needs to be paid for various possible actions when a vehicle travels in a lane. Qualitatively, this may be understood as follows: If turn cost of an action of the vehicle is greater, it is more "difficult" to perform the action. The turn cost may be (but is not limited thereto) determined by turn behavior cost and turn angle cost, or may be determined by turn behavior cost, turn angle cost, and driver habit cost, or may be determined only by driver habit cost.
(2) Turn behavior cost: Turn behavior cost is determined by a relational expression: "going straight through < turning right < turning left < making a U-turn".
(3) Turn angle cost: It is determined by geometric features such as a shape, width, and a turning direction of a road (lane) and a contour of a vehicle.
(4) Driver habit cost: It is cost that is determined by historical travel data of a vehicle. For example, if a vehicle always passed straight through a road intersection when driven by a specific driver, and if the driver does not choose to pass straight through the intersection next time, the driver habit cost is relatively high.
(5) Turn type (Turntype): It is a set of possible discrete actions of a vehicle at a road intersection, and generally includes straight-through driving, first right turn, second right turn, first left turn, second left turn, and U-turn. The turn type describes possible road branch choices when the vehicle is at the road intersection. Therefore, generally, for a road intersection, a quantity of parameters of the turn type of the vehicle is equal to a quantity of branches of the road intersection.
(6) Default turn type (or default turn behavior): It means an action with current lowest turn cost of a vehicle in a lane. For example, if the vehicle is in a through or right-turn lane, current lowest turn cost obtained based on turn behavior cost and turn angle cost (or another computing method of the turn cost in (1)) is straight-through driving, and current default turn behavior of the vehicle is straight-through driving. If the vehicle is in a left-turn lane, current lowest turn cost obtained based on turn behavior cost and turn angle cost (or another computing method of the turn cost in (1)) is left turn, and current default turn behavior of the vehicle is left turn. It should be understood that, as described in the foregoing definition of turn type, the turn type is based on a lane, and for a vehicle, default turn behavior in lane A and default turn behavior in lane B may be different. It should also be understood that, "turn type" or "default turn behavior" is based on a subsequent road intersection in a driving direction of the vehicle, because in general, the vehicle can only perform a "turn" operation at the road intersection, and can only perform lane switching in a road section without a road intersection.
(7) Default navigation route: It is a route that is determined by default turn behavior. It should be understood that, a default navigation route is based on each intersection, that is, a route with lowest turn cost determined by a vehicle at each intersection is a route corresponding to default turn behavior.

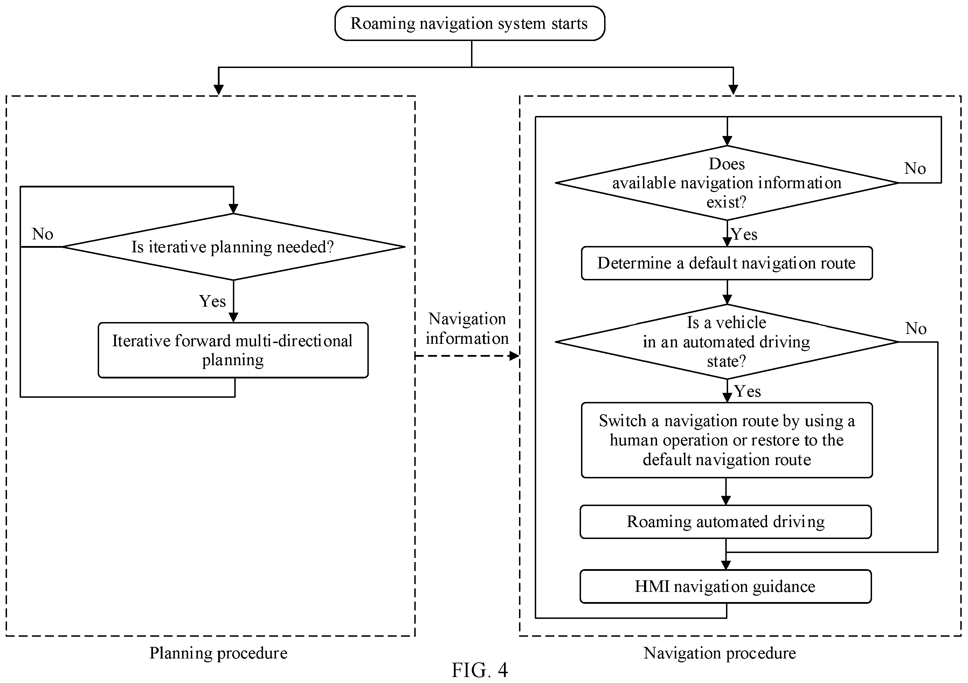

FIG. 4 is a schematic diagram of a functional framework of a roaming navigation system according to an embodiment of this application. The roaming navigation system includes two procedures: a planning procedure and a navigation procedure. Functions of the planning procedure include planning a driving strategy of a vehicle, and transmitting planned navigation information to the navigation procedure. The navigation procedure determines the driving strategy of the vehicle based on specified navigation information and the planned navigation information that is obtained from the planning procedure and/or an operation of a driver, and guides, based on the driving strategy of the vehicle, the vehicle to roam.

In the foregoing planning procedure, a planning process is repeatedly iterated, so that the vehicle continuously updates an optimized driving strategy of a next section of a route, so as to implement "roaming". It should be noted that the foregoing planning procedure and the navigation procedure are still implemented by the vehicle on the premise that a high-definition map is introduced.

The planning procedure is specifically described below.

First, it is determined that the vehicle is in a roaming mode, that is, the vehicle is, for example, in a driving state determined by the roaming navigation system shown in FIG. 4.

The planning procedure loops in real time to determine whether iterative planning is needed. If iterative planning is needed, iterative forward multi-directional planning is performed. In some embodiments, a trigger condition of iterative forward search includes at least one of the following: there is no planned route ahead of the vehicle, the vehicle has passed through a road intersection, a distance between the vehicle and a maximum range of current forward search is less than a specified threshold, or the vehicle yaws. With the use of the foregoing setting, the vehicle may have a specific event to trigger forward search during driving, so as to implement a continuous iterative forward search process. Specifically, a position of the ego vehicle is used as a start point, and forward multi-directional search is performed based on related information of the high-definition map. A maximum range Smax of forward search may be preset, for example, 3000 meters to 5000 meters. Information about a road in the maximum range of the forward search may be obtained by using information of the high-definition map. It should be understood that the maximum range Smax of the forward search is a parameter that may be adjusted based on an area in which the vehicle travels. On a highway section, the maximum range Smax may be set to, for example, 3000 meters to 6000 meters, and on an urban road section, the maximum range Smax may be set to, for example, 500 meters to 1500 meters.

If there is no road fork in the maximum range of the forward search, the planning procedure learns that a structure of a road ahead in the range Smax is without fork. In this case, it means that a road ahead of the vehicle is a through road without fork, and the vehicle keeps going straight through.

In some embodiments, if a first road fork (for example, an intersection) is encountered in the maximum range of the forward search, traversal search is performed on all branches (for example, m branches) of the road fork. The traversal search includes: continuing to search forward along any one of the branches in the maximum range of the forward search; and if another road fork (for example, which may be referred to as a second road fork) is encountered, for the second road fork, searching for a road branch (fork) with lowest turn cost of the second road fork, and setting the road branch with the lowest turn cost as a default navigation route of the second road fork. The turn cost may be determined by at least one of turn behavior cost and turn angle cost, or may be determined by both turn behavior cost and turn angle cost.

A person skilled in the art should understand that, a reason for searching for the default navigation route with the lowest turn cost for the second road fork is that computing power can be reduced in this way, because a required computing amount increases exponentially as a quantity of road forks increases. However, such a setting is merely an example for description. As computing power of an in-vehicle computing apparatus increases, the foregoing "searching for a road branch with lowest turn cost" may be adjusted to "searching for a road branch with lowest turn cost and a road branch with second lowest turn cost" or "searching for three road branches with lowest turn cost" without violating the spirit of this application.

In some embodiments, the roaming navigation system provides roaming navigation that is based on a driving habit, which may be activated by a driver through voluntary authorization. After this function is activated through authorization, the roaming navigation system records a choice of the vehicle when the vehicle has passed through each road fork (intersection or ramp), so as to provide a historical data reference for a choice of a subsequent default navigation route. In other words, in addition to evaluating turn cost based on turn behavior cost and turn angle cost as described in the foregoing embodiment of the planning procedure, a parameter of "driver habit cost" is added, that is, turn cost is obtained by using "turn behavior cost", "turn angle cost", and "driver habit cost" as parameters. The driver habit cost may be qualitatively defined as follows: A higher frequency of historical occurrence of a habit indicates higher cost of violating the habit. For example, if historical data of a driver at an intersection shows that the driver always turns right at the intersection, and if another strategy (for example, left turn) is performed instead of turning right at the intersection, driver habit cost at the intersection is high. Further, if there is only one type of historical turn behavior at a road fork (for example, the driver always turns right at the intersection as mentioned in the foregoing example), or a frequency of a specific type of turn behavior is definitely higher than that of other behavior in a history, impact of driver habit cost of the road fork is definitely greater than the other two types of cost. In this case, the roaming navigation system may determine turn cost of the road fork only based on the driver habit cost. In short, in this case, the roaming navigation system determines a current driving route choice for the road fork based on a choice for the road fork of the driver in a history, without considering turn behavior cost and turn angle cost. In this case, a default navigation route of the vehicle at the road fork is determined based on the driver habit cost. For a road fork, if there are a plurality of historical turn choices with little difference in frequency, or there is no historical choice, the roaming navigation system considers turn behavior cost and turn angle cost, that is, determines turn cost (default navigation route) based on the foregoing three parameters ("turn behavior cost", "turn angle cost", and "driver habit cost").

Still, in some embodiments, it is determined whether a search distance from the ego vehicle to the foregoing second road fork exceeds a minimum search distance Smin. If the search distance from the vehicle to the foregoing second road fork exceeds the minimum search distance Smin, the search is stopped. Smin may be set to, for example, any value within 500 meters to 1500 meters. A reason for such setting is as follows: A computing amount of traversal search for a road fork increases exponentially as a quantity of road forks increases. To reduce computing power, if it is known that there are two road forks in the Smax range, and a latter road fork is already quite a distance (Smin) from a current position of the vehicle, it may be considered that currently the vehicle has obtained sufficient forward road information to support planning of the planning procedure, and under this premise, forward search computing may be stopped in advance, to achieve a balance between appropriate planning and computing power reducing. A person skilled in the art should understand that, the foregoing "two forward road forks" is merely an example for description. As computing power of an in-vehicle computing apparatus increases, the foregoing "two forward road forks" may be adjusted to "three forward road forks" or "four forward road forks" without violating the spirit of this application.

Through the foregoing planning procedure, the vehicle may learn of a structure of a road ahead, and preliminarily determine a default navigation route for the vehicle at a road intersection ahead of the vehicle.

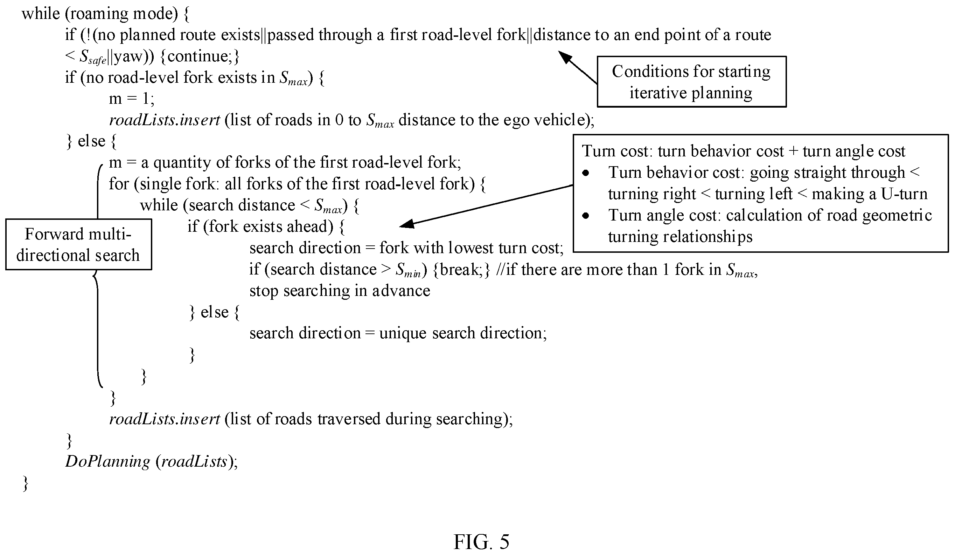

FIG. 5 shows pseudocode of a planning procedure of a roaming mode according to an embodiment of this application.

The navigation procedure is specifically described below.

The structure of the road ahead obtained in the foregoing planning procedure is transmitted to the navigation procedure in real time.

In some embodiments, the navigation procedure first checks in real time whether there is available navigation information, and if there is available navigation information, obtains default turn behavior with lowest turn cost for a current lane, and determines, based on the default turn behavior, a default navigation route at a first road fork ahead in a driving direction of the vehicle. A method for determining turn cost of the current lane may be consistent with logic for determining turn cost in the foregoing planning procedure. Generally, turn cost of the vehicle passing straight through a road fork is the smallest.

Further, it is determined whether the vehicle has cross-lane driving behavior. If the vehicle has cross-lane driving behavior, after the vehicle performs lane switching, a turn type of the vehicle is set to a default turn type for a switched-to lane.

The navigation procedure continues to determine whether the vehicle is in an intelligent driving state. If the vehicle is in an intelligent driving state, it indicates that the vehicle is currently in an intelligent driving state supported by the high-definition map. In this case, a behavior output of the driver is obtained, that is, if the driver has a lane switching request or a navigation route switching request in the intelligent driving state, a lane switching decision or a navigation route switching decision is made with reference to information about an ambient environment of the vehicle.

In the lane switching decision, if the driver shifts a lever rightward to intend to switch a lane rightward, the navigation procedure determines a specific position of the current lane. If the current lane is not a rightmost lane of a road, and a turn type of the vehicle is the default navigation route, a lane switching operation (intention) of the driver is approved, and the vehicle performs lane switching. If either of the foregoing two conditions is not met, the lane switching operation (intention) of the driver is not approved, and the navigation procedure makes the navigation route switching decision.

For example, if the vehicle currently travels in a second lane on the left in a roaming form (that is, automated driving), the second lane on the left is a through lane, and a leftmost lane (that is, a first lane on the left) of the road is a left-turn lane, and if the driver shifts the lever leftward to intend to switch a lane leftward, based on the foregoing determining logic, when the vehicle is not in the first lane on the left, and a current turn type of the vehicle is straight-through driving (that is, a default turn type for the second lane on the left), the vehicle may switch a lane, and after lane switching, a turn type of the vehicle is set to a default turn type for the first lane on the left, that is, left turn.

In the navigation route switching decision, it is first determined whether a distance between the vehicle and the road fork is greater than a safe distance. If the distance between the vehicle and the road fork is not greater than the safe distance, it is considered that the vehicle is excessively close to the road fork, and operations such as lane switching are not suitable for safety. If the distance between the vehicle and the road fork is greater than the safe distance, it is considered that the vehicle is far enough away from the road fork, and operations such as lane switching may be performed on the premise of safety. The safe distance may be preset, for example, any value within 30 meters to 50 meters, or may be determined based on a distance required for the vehicle to brake at a current speed to stop.

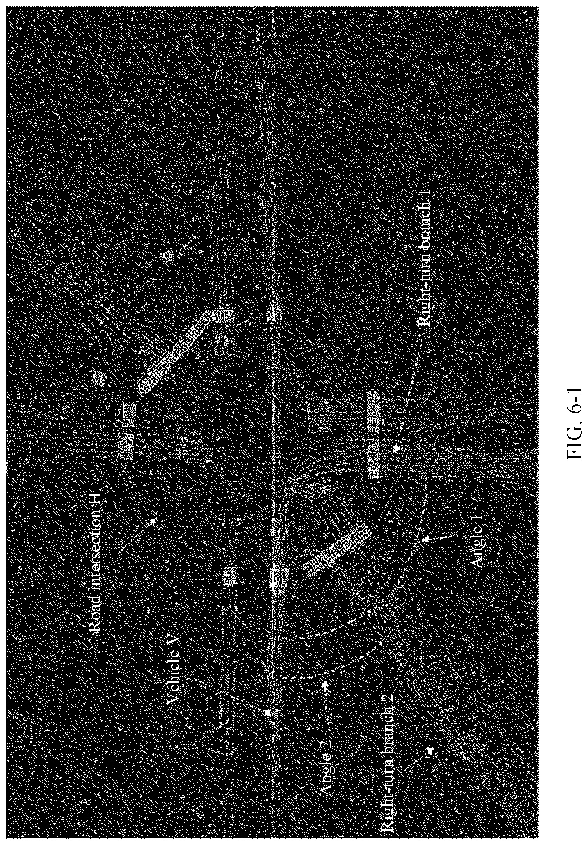

When the distance between the vehicle and the road fork is greater than the safe distance, if the vehicle is in a right side lane and the driver shifts the lever rightward, a turn type of the vehicle is set to a next rightward turn type (that is, a next rightward road branch of a road intersection ahead of the vehicle compared with a current default navigation route of the vehicle). The "next rightward turn type" means a next rightward branch route that is of a road intersection closest to the vehicle and that has a second smallest included angle compared with the current default navigation route of the vehicle. More specifically, the included angle means an included angle between the rightward branch route and a line segment that is determined by a current position of the vehicle and a position of the road intersection. More specifically, for example, if a next road intersection ahead of the vehicle is a crossroad, and a current default navigation route of the vehicle is to pass straight through the road intersection, a next rightward turn type of the vehicle means a right-turn route of the intersection for the vehicle. If a road intersection ahead of the vehicle is (for example, but not limited to) a road intersection with six radial routes, with reference to a scenario schematic diagram shown in FIG. 6-1, when the vehicle turns right at a road intersection H, there are two possible choices: a right-turn branch 1 and a right-turn branch 2. If a current default navigation route of a vehicle V is to pass straight through the road intersection H, a "next rightward turn type" of the vehicle means a right-turn branch route having a relatively large included angle with a current driving lane of the vehicle, that is, the right-turn branch 1. If a current default navigation route of the vehicle V is the right-turn branch 1, and under this premise, the driver performs an operation (intention), for example, shifts the lever rightward, a turn type of the vehicle is changed to "turn at the intersection ahead into a right-turn branch route having a relatively small included angle with a current driving lane", that is, the turn type of the vehicle is changed to the "right-turn branch 2". In other words, the foregoing operation of the driver enables the vehicle V to turn at the road intersection into the right-turn branch 2. It should be understood that, although the right-turn branch of the road intersection is used as an example in the foregoing description, based on left-right symmetry, the foregoing logic is still true after "right" in the foregoing description is replaced with "left".

Still, if the vehicle is in a right side lane, and the driver shifts the lever rightward and then shifts the lever leftward, a turn type of the vehicle is opposite to a direction of lever shifting behavior of the driver at this time. In this case, the navigation procedure restores the turn type of the vehicle to a default navigation route at the beginning of roaming mode logic. The example in a previous paragraph is used for continuous description. If the turn type of the vehicle is changed to the right-turn branch 2 of the road intersection after the driver shifts the lever rightward, and in this case, the driver shifts the lever leftward, the turn type of the vehicle is changed to a default turn type (that is, straight-through driving) at the beginning of the procedure. It should be understood that, although the right-turn branch of the road intersection is used as an example in the foregoing description, based on left-right symmetry, the foregoing logic is still true after "right" in the foregoing description is replaced with "left".

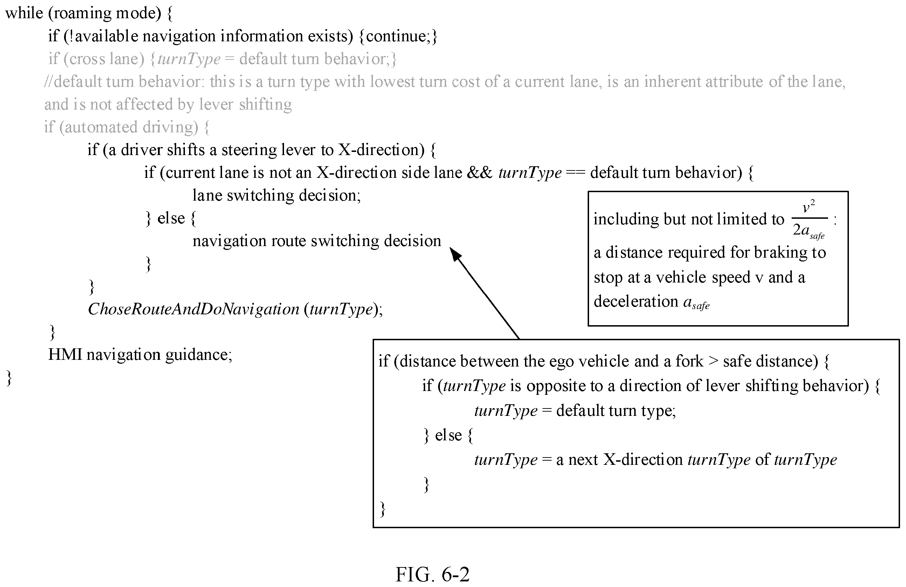

FIG. 6-2 shows pseudocode of a navigation procedure of a roaming mode according to an embodiment of this application.

The roaming mode is described below with reference to a specific road scenario.

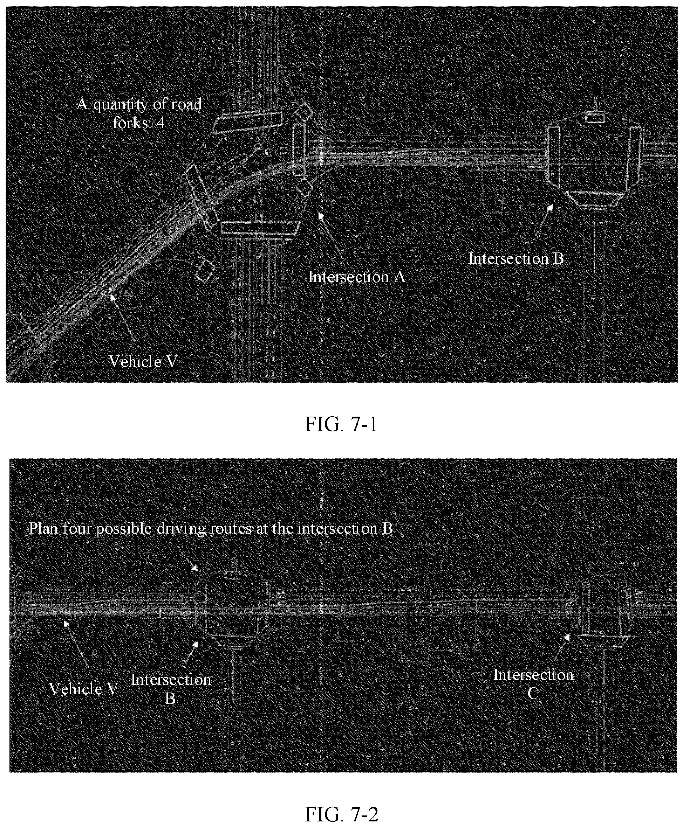

FIG. 7-1 is a schematic diagram of a vehicle V in a roaming navigation state based on a high-definition map at a moment in a road scenario. It may be learned from FIG. 7-1 that, the vehicle V is in a through or right-turn lane, and there is an intersection A and an intersection B in sequence ahead of the vehicle V (a right part of the vehicle V in FIG. 7-1). The intersection A has four road forks, which means that the intersection A is a crossroad from a topological perspective. After planning is completed, the vehicle V passes straight through the intersection A and the intersection B by default. In other words, a default navigation route of the vehicle V at the intersection A and the intersection B ahead is to "pass straight through" the intersection A and the intersection B.

FIG. 7-2 is a schematic diagram of the vehicle V in the roaming navigation state based on the high-definition map at a subsequent moment in the scenario shown in FIG. 7-1. Still in the scenario shown in FIG. 7-1, the vehicle V passed straight through the intersection A. This condition triggers iterative planning of a roaming navigation system (refer to one of the conditions of iterative planning in the pseudocode in FIG. 5: "passed through a first road-level fork"), and the system re-plans a plurality of driving routes. In this case, the vehicle V is in a through or right-turn lane, and there is the intersection B and an intersection C in sequence ahead of the vehicle V (a right part of the vehicle V in FIG. 7-2). The intersection B has four road forks, which means that the intersection B is a crossroad from a topological perspective. Therefore, the navigation roaming system plans four possible driving routes at the intersection B, which correspond to the four forks of the crossroad. A default navigation route of the vehicle is to pass straight through the intersection B. Further, at the next intersection C, a default navigation route of the vehicle is to pass straight through the intersection C.

It should be noted that, in the foregoing iterative planning process, a thread of the navigation system of the vehicle ensures that the vehicle continues to travel according to a navigation route, and does not exit an automated driving process.

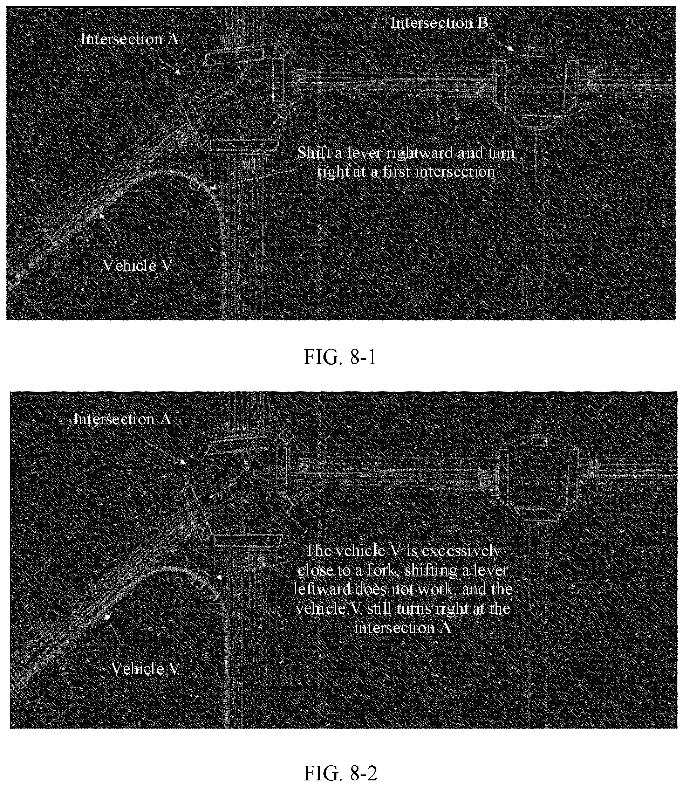

FIG. 8-1 is a schematic diagram of a vehicle V in a roaming navigation state based on a high-definition map at a moment in a road scenario. It may be learned from FIG. 8-1 that, the vehicle V is in a through or right-turn lane, and there is an intersection A and an intersection B in sequence ahead of the vehicle V (a right part of the vehicle V in FIG. 8-1). The intersection A has four road forks, which means that the intersection A is a crossroad from a topological perspective. After planning is completed, the vehicle V passes straight through the intersection A by default. At a current moment, the vehicle V is 20 meters away from a fork where a right-turn lane diverges from a main road, and a speed of the vehicle V is 6.0 m/S. If a deceleration of the vehicle is -1 m/S², a distance required for the vehicle V to brake to stop is 18 meters, and the braking distance is less than a distance (20 meters) between the vehicle V and the fork where the right-turn lane diverges from the main road. If the driver of the vehicle V shifts a steering lever rightward (that is, the driver intends to turn right) at this moment, based on the determining logic in the foregoing navigation procedure, a current default navigation route of the vehicle is set to a next rightward turn type, that is, the vehicle turns right at the next crossroad A.

FIG. 8-2 is a schematic diagram of the vehicle V in the roaming navigation state based on the high-definition map at a subsequent moment in the scenario shown in FIG. 8-1. Still in the scenario shown in FIG. 8-1, the vehicle V keeps a roaming mode and travels forward for 5 meters at a speed of 6.0 m/S. In this case, the vehicle V is 15 meters away from the fork where the right-turn lane diverges from the main road, and a safe distance for the vehicle to brake to stop is still 18 meters. If the driver shifts the steering lever leftward (that is, the driver intends to switch back to straight-through driving) at this moment, the vehicle V still turns right at the intersection A, because a distance between the vehicle V and the fork of the intersection A is less than the safe distance, and the determining logic in the foregoing navigation procedure is not met.

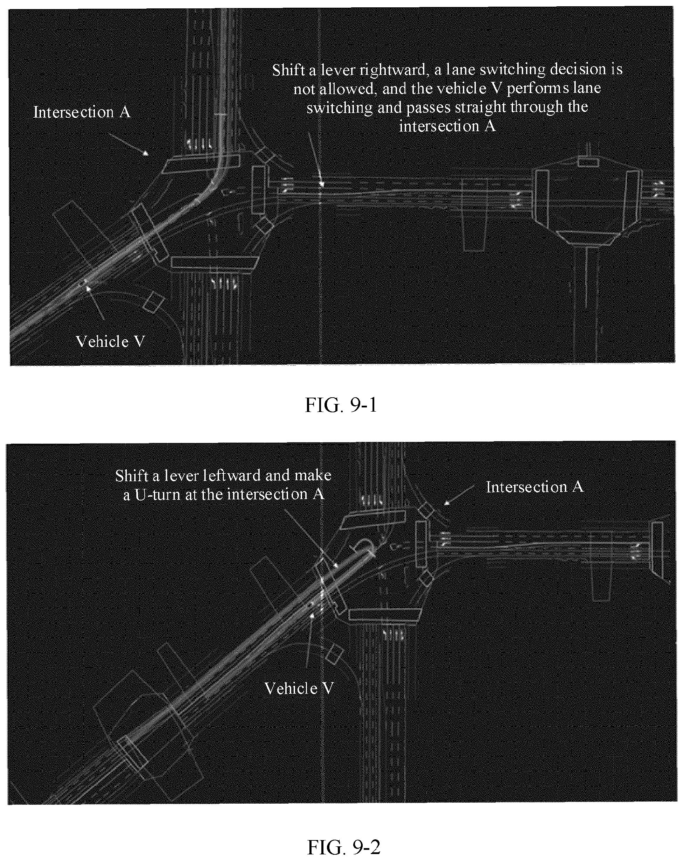

FIG. 9-1 is a schematic diagram of a vehicle V in a roaming navigation state based on a high-definition map at a moment in a road scenario. It may be learned from FIG. 9-1 that, the vehicle V is in a left-turn lane, and there is an intersection A and an intersection B in sequence ahead of the vehicle V (a right part of the vehicle V in FIG. 9-1). The intersection A has four road forks, which means that the intersection A is a crossroad from a topological perspective. At a current moment, a default navigation route of the vehicle V is to turn left at the first intersection A. If the driver shifts a steering lever rightward (that is, the driver intends to turn right), based on the determining logic in the foregoing navigation procedure, the vehicle V first switches a lane from the left-turn lane to a through lane, and then passes straight through the intersection A.

FIG. 9-2 is a schematic diagram of a vehicle V in a roaming navigation state based on a high-definition map at a moment in a road scenario. In FIG. 9-2, the vehicle V is in a left-turn lane, and there is an intersection A and an intersection B in sequence ahead of the vehicle V (a right part of the vehicle V in FIG. 9-1). The intersection A has four road forks, which means that the intersection A is a crossroad from a topological perspective. A current speed of the vehicle V is 7.0 m/S. If a deceleration of the vehicle is -1 m/S², a distance required for the vehicle V to brake to stop is 24.5 meters. If the vehicle is 30 meters away from the road intersection, the braking distance of the vehicle V is less than a distance between the vehicle and the road intersection. In this case, if the driver shifts a steering lever leftward (that is, the driver intends to turn left), according to the determining procedure in the foregoing navigation procedure, a default navigation route of the vehicle is changed to a next leftward turn type, that is, a turn type that is more "leftward" than a current turn type (left turn). In other words, the vehicle V switches to a turn type of "U-turn", and the vehicle V makes a U-shaped turn at the intersection V.

In some embodiments, if the high-definition map fails, for example, the vehicle cannot obtain available high-definition map data of a road section ahead, or an actual situation of a road ahead of the vehicle is inconsistent with high-definition map data due to situations such as road repair, the roaming navigation system of the vehicle recognizes such a situation, notifies, in a human-machine interaction manner, the vehicle driver that a roaming function of the vehicle is currently restricted, and requests the driver to perform take-over. In addition, the vehicle takes a measure, for example, function degradation or parking based on a specific surrounding situation. The function degradation may mean, for example, degrading a roaming function that is based on the high-definition map to a vehicle cruise function that is based on road structure cognition.

A person skilled in the art should understand that, although in a plurality of embodiments described above, lever shifting of the driver is used as an example of an operation in which the driver expresses an intention of the driver, other operations may also be used, provided that the operation expresses an intention of the driver, for example, a button operation, voice input, and gesture recognition.

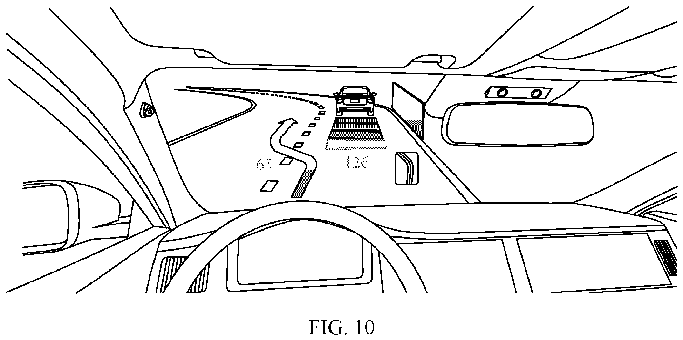

The roaming state of the vehicle in a plurality of embodiments described above may be presented to the driver in various manners, so that the driver has an intuitive understanding of a current driving status of the vehicle. FIG. 10 shows that a vehicle displays, by using a head-up display (HUD), information to a driver that the vehicle is about to switch a lane leftward according to an embodiment of this application. It should be understood that other types of information, for example, U-turn, turn, position, and speed information of the vehicle, may also be displayed to the driver in a plurality of manners, for example, displayed by using a central control screen, or broadcast by using a voice.

The described apparatus embodiment is merely an example. The units described as separate components may or may not be physically separate, and components displayed as units may or may not be physical units, may be located in one position, or may be distributed on a plurality of network units. Some or all of the modules may be selected according to an actual need to achieve objectives of the solutions of embodiments. In addition, in the accompanying drawings of apparatus embodiments provided in this application, connection relationships between modules indicate that the modules are communicatively connected to each other, which may be specifically implemented as one or more communication buses or signal cables.

Based on descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by software, hardware, firmware, or any combination thereof. When software is used to implement the foregoing embodiments, all or some of the foregoing embodiments may be implemented in a form of computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid-state drive (Solid State Drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprising" (comprising) does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce a good effect.

The foregoing descriptions are merely specific implementations of this application, but are not intended to limit the protection scope of this application. Any variation or replacement readily figured out by any person skilled in the art within the technical scope disclosed in the present invention shall fall within the protection scope of this application. Therefore, the protection scope of this application shall be subject to the protection scope of the claims.

## Claims

1. An intelligent driving method, comprising:
performing, by a vehicle, roaming based on a high-definition map, wherein the roaming comprises: lane switching, driving direction changing, or partial navigation strategy changing;
performing, by the vehicle, the lane switching, the driving direction changing, or the partial navigation strategy changing based on an operation of a driver, wherein the operation of the driver comprises at least one of the following: lever shifting, voice control, button control, or gesture control;
obtaining a direction of an operation intention of the driver;
obtaining a lane in which the vehicle is currently located and a default turn type for the lane;
when the lane in which the vehicle is currently located is not a side lane in the direction of the operation intention of the driver, and a current turn type of the vehicle is consistent with the default turn type for the lane, enforcing a lane switching decision on the vehicle, wherein a turn type of the vehicle after lane switching is a default turn type for a lane in which the vehicle is located; and
when a distance between the vehicle and a next road fork is less than a safe distance, ignoring the operation of the driver.

2. The method according to claim 1, comprising:
obtaining, based on iterative forward search, a planned route of the vehicle at a road intersection ahead in a driving direction of the vehicle, wherein the planned route comprises a default navigation route of the vehicle at the road intersection.

3. The method according to claim 2, wherein
the obtaining, based on iterative forward search, a planned route of the vehicle at a road intersection ahead in a driving direction of the vehicle comprises: determining, based on turn behavior cost and turn angle cost, a route with lowest turn cost of the vehicle at the road intersection ahead, and determining the route with the lowest turn cost as the default navigation route of the vehicle at the road intersection ahead.

4. The method according to claim 3, wherein
a trigger condition of the iterative forward search comprises at least one of the following:
there is no planned route ahead of the vehicle, the vehicle has passed through a road intersection, a distance between the vehicle and a maximum range of current forward search is less than a specified threshold, or the vehicle yaws.

5. The method according to claim 4, comprising:
determining, based on driver habit cost, the default navigation route at the road intersection.

6. The method according to any preceding claim, wherein
the default turn type means, for a next road intersection in the driving direction of the vehicle, a road branch corresponding to a turn type, with lowest turn cost, of the vehicle in the current lane; and
a default turn type of the vehicle after the lane switching indicates, if the vehicle performs lane switching, an action with lowest turn cost of the vehicle in a switched-to lane for a next road intersection in a driving direction of the vehicle.

7. The method according to any one of claims 1 to 6, further comprising:
displaying information related to the roaming in a human-machine interaction interface of the vehicle, wherein the human-machine interaction interface comprises at least one of a vehicle central control screen and a head-up display.

8. A non-volatile computer-readable storage medium, storing computer program instructions, wherein
when the computer program instructions are executed by a processor, the method according to any one of claims 1 to 7 is implemented.

9. An intelligent driving apparatus, comprising:
a processor (151); and
a memory (152), wherein the memory stores an instruction set, wherein
the instruction set is capable of being executed by the processor to implement the method according to any one of claims 1 to 7.

10. A vehicle (100), comprising the intelligent driving apparatus according to claim 9.

## Patentansprüche

1. Intelligentes Antriebsverfahren, umfassend:
Durchführen von Roaming durch ein Fahrzeug basierend auf einer hochauflösenden Karte, wobei das Roaming Folgendes umfasst:
Spurwechsel, Fahrtrichtungsänderung oder Teiländerung der Navigationsstrategie;
Durchführen des Spurwechsels, der Fahrtrichtungsänderung oder der Teiländerung der Navigationsstrategie durch das Fahrzeug basierend auf einer Bedienung durch einen Fahrer, wobei die Bedienung durch den Fahrer mindestens eine der folgenden umfasst: Hebelschaltung, Sprachsteuerung, Tastensteuerung oder Gestensteuerung;
Ermitteln einer Richtung einer Bedienungsabsicht des Fahrers;
Ermitteln einer Fahrspur, auf welcher sich das Fahrzeug aktuell befindet, und eines Standardabbiegetyps für die Fahrspur;
wenn die Fahrspur, auf welcher sich das Fahrzeug aktuell befindet, keine Seitenspur in der Richtung der Bedienungsabsicht des Fahrers ist und ein aktueller Abbiegetyp des Fahrzeugs mit dem Standardabbiegetyp für die Fahrspur konsistent ist, Erzwingen einer Spurwechselentscheidung für das Fahrzeug, wobei ein Abbiegetyp des Fahrzeugs nach dem Spurwechsel ein Standardabbiegetyp für eine Fahrspur ist, auf welcher sich das Fahrzeug befindet; und
wenn ein Abstand zwischen dem Fahrzeug und der nächsten Straßengabelung geringer als ein Sicherheitsabstand ist, Ignorieren der Bedienung durch den Fahrer.

2. Verfahren nach Anspruch 1, umfassend:
Ermitteln einer geplanten Route für das Fahrzeug an einer in einer Fahrtrichtung des Fahrzeugs vorausliegenden Straßenkreuzung basierend auf einer iterativen Vorwärtssuche, wobei die geplante Route eine Standardnavigationsroute für das Fahrzeug an der Straßenkreuzung umfasst.

3. Verfahren nach Anspruch 2, wobei
das Ermitteln einer geplanten Route für das Fahrzeug an einer in einer Fahrtrichtung des Fahrzeugs vorausliegenden Straßenkreuzung basierend auf einer iterativen Vorwärtssuche Folgendes umfasst: Bestimmen einer Route mit den niedrigsten Abbiegekosten für das Fahrzeug an der vorausliegenden Straßenkreuzung basierend auf Abbiegeverhaltenskosten und Abbiegewinkelkosten und Bestimmen der Route mit den niedrigsten Abbiegekosten als die Standardnavigationsroute für das Fahrzeug an der vorausliegenden Straßenkreuzung.

4. Verfahren nach Anspruch 3, wobei
eine Auslösebedingung der iterativen Vorwärtssuche mindestens eines der folgenden umfasst: es besteht keine geplante Route vor dem Fahrzeug, das Fahrzeug hat eine Straßenkreuzung passiert, ein Abstand zwischen dem Fahrzeug und einer maximalen Reichweite der aktuellen Vorwärtssuche ist kleiner als ein festgelegter Schwellenwert oder das Fahrzeug giert.

5. Verfahren nach Anspruch 4, umfassend:
Bestimmen der Standardnavigationsroute an der Straßenkreuzung basierend auf den Gewohnheitskosten des Fahrers.

6. Verfahren nach einem der vorhergehenden Ansprüche, wobei
der Standardabbiegetyp für eine nächste Straßenkreuzung in der Fahrtrichtung des Fahrzeugs eine Straßenabzweigung entsprechend einem Abbiegetyp mit den niedrigsten Abbiegekosten für das Fahrzeug auf der aktuellen Fahrspur bedeutet; und
ein Standardabbiegetyp des Fahrzeugs nach dem Spurwechsel, sofern das Fahrzeug einen Spurwechsel durchführt, eine Aktion mit den niedrigsten Abbiegekosten für das Fahrzeug in einer gewechselten Fahrspur für eine nächste Straßenkreuzung in einer Fahrtrichtung des Fahrzeugs angibt.

7. Verfahren nach einem der Ansprüche 1 bis 6, ferner umfassend: Anzeigen von Informationen, die Roaming in einer Mensch-Maschine-Interaktionsschnittstelle des Fahrzeugs betreffen, wobei die Mensch-Maschine-Interaktionsschnittstelle mindestens eines von einem zentralen Fahrzeugsteuerbildschirm und ein Head-up-Display umfasst.

8. Nichtflüchtiges computerlesbares Speichermedium, das Computerprogrammanweisungen speichert, wobei
wenn die Computerprogrammanweisungen durch einen Prozessor ausgeführt werden, das Verfahren nach einem der Ansprüche 1 bis 7 implementiert wird.

9. Intelligente Antriebsvorrichtung, umfassend:
einen Prozessor (151); und
einen Speicher (152), wobei der Speicher einen Anweisungssatz speichert, wobei
der Anweisungssatz dazu in der Lage ist, durch den Prozessor ausgeführt zu werden, um das Verfahren nach einem der Ansprüche 1 bis 7 zu implementieren.

10. Fahrzeug (100), umfassend die intelligente Antriebsvorrichtung nach Anspruch 9.

## Revendications

1. Procédé de conduite intelligent, comprenant :
la réalisation, par un véhicule, d'une itinérance sur la base d'une carte haute définition, dans lequel l'itinérance comprend : un changement de voie, un changement de direction de conduite, ou un changement partiel de stratégie de navigation ;
la réalisation, par le véhicule, du changement de voie, du changement de direction de conduite, ou du changement partiel de stratégie de navigation sur la base d'une opération d'un conducteur, dans lequel l'opération du conducteur comprend au moins l'un des éléments suivants : un changement de vitesse par levier, une commande vocale, une commande par bouton, ou une commande gestuelle ;
l'obtention d'une direction d'une intention d'opération du conducteur ;
l'obtention d'une voie dans laquelle se trouve actuellement le véhicule et un type de virage par défaut pour la voie ;
lorsque la voie dans laquelle se trouve actuellement le véhicule n'est pas une voie latérale dans la direction de l'intention d'opération du conducteur, et qu'un type de virage actuel du véhicule est cohérent avec le type de virage par défaut pour la voie, l'application d'une décision de changement de voie au véhicule, dans lequel un type de virage du véhicule après le changement de voie est un type de virage par défaut pour une voie dans laquelle se trouve le véhicule ; et
lorsqu'une distance entre le véhicule et une prochaine bifurcation est inférieure à une distance de sécurité, le fait d'ignorer l'opération du conducteur.

2. Procédé selon la revendication 1, comprenant :
l'obtention, sur la base d'une recherche itérative vers l'avant, d'un itinéraire planifié du véhicule à une intersection routière en avant dans une direction de conduite du véhicule, dans lequel l'itinéraire planifié comprend un itinéraire de navigation par défaut du véhicule à l'intersection routière.

3. Procédé selon la revendication 2, dans lequel
l'obtention, sur la base d'une recherche itérative vers l'avant, d'un itinéraire planifié du véhicule à une intersection routière en avant dans une direction de conduite du véhicule comprend :
la détermination, sur la base d'un coût de comportement de virage et d'un coût de l'angle de virage, d'un itinéraire avec le coût de virage le plus bas du véhicule au niveau de l'intersection routière en avant, et la détermination de l'itinéraire avec le coût de virage le plus bas comme itinéraire de navigation par défaut du véhicule au niveau de l'intersection routière en avant.

4. Procédé selon la revendication 3, dans lequel
une condition de déclenchement de la recherche itérative vers l'avant comprend au moins l'un des éléments suivants : il n'y a pas d'itinéraire planifié en avant du véhicule, le véhicule a traversé une intersection routière, une distance entre le véhicule et une portée maximale de recherche vers l'avant actuelle est inférieure à un seuil spécifié, ou le véhicule lacet.

5. Procédé selon la revendication 4, comprenant :
la détermination, sur la base du coût des habitudes du conducteur, de l'itinéraire de navigation par défaut au niveau de l'intersection routière.

6. Procédé selon une quelconque revendication précédente, dans lequel
le type de virage par défaut signifie, pour une prochaine intersection routière dans la direction de conduite du véhicule, une branche de route correspondant à un type de virage, avec le coût de virage le plus bas, du véhicule dans la voie actuelle ; et
un type de virage par défaut du véhicule après le changement de voie indique, si le véhicule réalise un changement de voie, une action avec le coût de virage le plus bas du véhicule dans une voie vers laquelle changer pour une prochaine intersection routière dans une direction de conduite du véhicule.

7. Procédé selon l'une quelconque des revendications 1 à 6, comprenant également :
l'affichage d'informations relatives à l'itinérance dans une interface d'interaction homme-machine du véhicule, dans lequel l'interface d'interaction homme-machine comprend au moins un écran de commande central du véhicule et un affichage tête haute.

8. Support de stockage non volatil lisible par ordinateur, stockant des instructions de programme informatique, dans lequel lorsque les instructions de programme informatique sont exécutées par un processeur, le procédé selon l'une quelconque des revendications 1 à 7 est mis en œuvre.

9. Appareil de conduite intelligent, comprenant :
un processeur (151) ; et
une mémoire (152), dans lequel la mémoire stocke un ensemble d'instructions, dans lequel
l'ensemble d'instructions peut être exécuté par le processeur pour mettre en œuvre le procédé selon l'une quelconque des revendications 1 à 7.

10. Véhicule (100), comprenant l'appareil de conduite intelligent selon la revendication 9.
